# DEMANDE DE BREVET EUROPEEN

(11) **EP 1 656 866 A1**
(43) Date de publication de la demande: **17.05.2006**
(21) Numéro de dépôt: 04026939.1
(22) Date de dépôt: 12.11.2004
(51) Int. Cl.: A47J 43/046, A47J 27/00, A47J 36/24

(54) **Appareil et méthode pour la préparation de mousse à partir d'un liquide alimentaire à base de lait**

(71) Demandeur: NESTEC S.A., 1800 Vevey (CH)
(72) Inventeur: Boussemart, Christophe, 74500 Lugrin (FR); Yoakim, Alfred, 1806 St-Legier-La Chiesaz (CH); Chiarella, Francesco, 1800 Vevey (CH)
(74) Mandataire: Borne, Patrice Daniel

(57) **Abrégé**

Appareil pour la préparation d'une mousse à partir d'un liquide à base de lait qui comprend une cuve (21) pour recevoir le liquide à mousser dans lequel se positionne un batteur (4) actionnable en rotation, un bâti (20) en association avec la cuve; un système d'entraînement (5) du batteur. Le système d'entraînement du batteur et le batteur (4, 5) comprennent des éléments magnétiques permettant l'entraînement magnétique du batteur en rotation dans la cuve (21). Des moyens de perturbation (4, 5, 6) sont aussi prévus pour casser ou empêcher une circulation symétrique du liquide autour de l'axe vertical médian (I) de la cuve.

## Description

La présente invention concerne un appareil et une méthode pour la préparation d'une mousse à partir d'un liquide alimentaire à base de lait, destiné, par exemple à être utilisé dans le cadre de la préparation de boissons telle que des cappuccinos, des cafés au lait, café latte et macchiato, chocolat ou autres spécialités de boissons chaudes.

Les spécialités de boissons dont une portion au moins est formée de mousse connaissent un engouement de plus en plus important. La boisson de ce type la plus connue est un café du type cappuccino. Elle comprend une portion liquide de café surmontée d'une couche de mousse de lait qui du fait de sa densité très inférieure surnage sur la surface du liquide. En général, sa préparation demande du temps, des manipulations et du nettoyage.

La façon la plus usuelle de préparer une mousse à base de lait est de verser la quantité désirée de lait dans le récipient, de plonger une tubulure de sortie de vapeur d'une machine à café dans le récipient tout en l'agitant de haut en bas pour entraîner l'air nécessaire à l'obtention de la mousse.

Un premier inconvénient de ce procédé est qu'il nécessite de disposer soit d'une machine à café équipée d'une sortie de vapeur; alors que toutes ne le sont pas.

Un autre inconvénient réside dans le fait qu'il n'est généralement pas possible préparer de la mousse en même temps que l'on prépare un café, à moins de disposer d'une machine complexe et coûteuse, à deux circuits de fluides séparés; l'un pour l'extraction du café et l'autre pour la production de vapeur.

Un autre inconvénient lié à l'utilisation de machines à café avec sortie de vapeur provient du fait que le système de chauffage de l'eau de ces machines, le plus souvent un thermobloc, doit être maintenu enclenché en permanence pour produire la vapeur sans temps d'attente. Ces machines consomment donc des quantités d'énergie importantes; ce qui rend leur exploitation peu économique. Il est à noter aussi que les tubulures de vapeurs s'entartrent rapidement dans des conditions d'eau calcaire; ce qui nécessite une maintenance régulière pour les remettre en état.

Un autre inconvénient de ce type de machines provient du fait que la qualité de la mousse dépend de l'habileté de l'utilisateur de sorte que ces machines ne permettent pas d'obtenir une mousse aux caractéristiques reproductibles et de qualité homogène.

Un autre inconvénient provient de ce que les tubulures en contact avec le lait doivent sont difficiles et peu pratiques à nettoyer.

Il existe par ailleurs des appareils de brassage mécanique qui sont usuellement destinés à un usage domestique pour foisonner des mousses à partir de produits alimentaires plus ou moins visqueux tels que des oeufs, de la glace, des jus ou autres. Le problème de ces appareils est de plusieurs ordres; faisant qu'ils ne sont pas adaptés à la production de mousse à partir d'un liquide à base de lait pour la confection d'une boisson. Un inconvénient, par exemple, vient de ce que ces appareils brassent un liquide ou une pâte à froid; ce qui limite considérablement leur usage possible. De plus, le lait ne mousse par aussi bien à froid ou à température ambiante.

Un autre inconvénient vient de ce que ces appareils sont mal adaptés aux foisonnement des liquides microbiologiquement sensibles comme le lait. Il faut prévoir un nettoyage régulier de la cuve de l'appareil pour enlever tout résidu alimentaire solide. En plus, le chauffage du lait a tendance à augmenter la déposition et l'adhésion contre les surfaces des protéines cuites ou brûlées. Les appareils existants ne sont pour la plupart pas bien conçus pour réduire l'incrustation de ces résidus solides; ce qui rend le nettoyage pénible.

Ces appareils possèdent aussi un mécanisme de brassage et d'entraînement qui est fixe et intrusif dans la cuve; qui présente plusieurs inconvénients: un temps de démontage/remontage non négligeable, une tendance à s'encrasser plus rapidement, un surcoût du aux nombreuses pièces, une difficulté de nettoyage des moyens de brassage.

Un autre inconvénient de ces appareils vient de ce que le moussage dans ces appareils n'est pas optimal pour des raisons liées à la disposition des moyens de brassage. Certains appareils possèdent un moyen de brassage disposé au centre de la cuve. Une telle disposition n'est pas efficace pour transformer rapidement un volume de liquide à base de lait en une mousse onctueuse.

D'autres appareils possèdent plusieurs batteurs. Ces dispositions sont généralement mécaniques avec des moyens d'engrenage nécessaires pour assurer la coordination en rotation des batteurs; ce qui rend le système intrusif, donc moins hygiénique, augmente le nombre de pièces et rend le nettoyage plus fastidieux.

Le brevet US 6,318,247 se rapporte à un appareil pour la préparation de boissons ou aliments chauds sous agitation comme un chocolat chaud, par exemple. L'appareil comprend un système d'entraînement d'un batteur à effet magnétique. I1 possède toutefois plusieurs inconvénients. En premier, dans un tel appareil, le liquide ou mousse est agité de manière coaxiale avec l'axe central de la cuve; ce qui produit une circulation où certaines couches de liquide ou mousse, en particulier, les couches périphériques sont moins agitées que d'autres, en particulier, les couches proches du centre, en raison de l'effet de centrifugation produit par le batteur. Une telle circulation n'est ainsi pas propice à produire une mousse de qualité suffisante et à réduire le temps nécessaire à produire cette mousse. En plus, la structure de l'appareil n'est pas hygiénique pour traiter un liquide à base de lait et le nettoyage n'est pas facilité par une telle construction.

D'autres dispositifs de brassage de produits alimentaires ayant sensiblement les mêmes inconvénients sont décrits dans les documents de brevets: WO 2004/043213 A1 ou encore DE 196 24 648 A1.

D'autres systèmes de brassage à engagement magnétique sont décrits dans les documents: US 2,932,493, DE 1 131 372, US 4,537,332, US 6,712,497, mais aucun d'eux n'apporte de solutions appropriées pour produire une mousse de qualité, dans un temps restreint et de manière hygiénique.

L'invention a donc pour but principal de palier les inconvénients de l'art antérieur en proposant un appareil mieux adapté à la production de mousse à partir d'un liquide alimentaire à base de lait, en particulier, à destination de la confection d'une boisson.

L'invention a donc pour objet de fournir un appareil qui soit de conception plus hygiénique, facilement nettoyable, et simple d'utilisation.

L'invention a aussi pour objet de fournir un appareil produisant une mousse aux caractéristiques et qualités reproductibles, et dans un temps de préparation aussi réduit que possible.

L'invention a aussi pour objet de simplifier le procédé de préparation en limitant l'intervention de l'utilisateur.

L'invention a aussi pour objet de fournir un appareil d'utilisation économique.

A cet effet, l'invention se rapporte à un appareil pour la préparation de mousse à partir d'un liquide à base de lait comprenant:
une cuve pour recevoir le liquide à mousser dans lequel se positionne un batteur actionnable en rotation,
un bâti en association avec la cuve;
des moyens d'entraînement du batteur,
l'appareil comprenant en outre des moyens d'alimentation électrique pour alimenter électriquement les moyens d'entraînement.

Une amélioration de l'appareil provient de ce que les moyens d'entraînement et le batteur sont configurés de façon à ce que le batteur soit entraîné, par effet d'entraînement magnétique, par les moyens d'entraînement, sans l'intrusion d'un organe de liaison mécanique au travers de la paroi.

L'un des principes de l'invention est basé en effet sur le fait que l'appareil est destiné à recevoir et traiter un liquide alimentaire qui se dépose facilement contre les parois de la cuve; en particulier lorsqu'il est chauffé, et donc on prévoit un système non-intrusif d'entraînement du batteur, donc, plus hygiénique et plus simple.

Une autre caractéristique est que des moyens de perturbation sont prévus pour casser ou empêcher une circulation du liquide qui soit symétrique et sensiblement coaxiale autour de l'axe vertical médian de la cuve. Une telle configuration assure une circulation du fluide dans la cuve qui soit suffisamment perturbée; ce qui diminue le temps nécessaire à produire la mousse et assure un ratio mousse:liquide plus élevé. Une telle configuration permet d'obtenir des résultats en utilisant le système non-intrusif de l'invention, donc avec un seul batteur; ce qui simplifie fortement l'appareil et réduit les coûts de celui-ci.

De préférence, des moyens de chauffage sont disposés en association avec la cuve pour chauffer le liquide dans la cuve. Des moyens de chauffage permettent de chauffer le liquide et la mousse en même temps que la mousse est produite.

Selon un mode de l'invention, l'appareil comprend un moyen d'entraînement produisant au moins un champ magnétique excentré par rapport à l'axe vertical médian de la cuve. Un tel champ magnétique excentré joue ainsi le rôle de moyen de perturbation en entraînant le batteur de manière décalée par rapport au centre de la cuve. Ainsi, de par la position décalée du batteur, les couches coaxiales selon l'axe du batteur de liquide, mousse ou liquide:mousse sont brassées par l'effet de centrifugation et dans une configuration asymétrique.

Un tel moyen est non-intrusif de sorte qu'aucun élément de transmission n'est nécessaire au travers de la cuve, pour relier les moyens d'entraînement au batteur, ou encore pour relier ou guider le batteur avec la cuve; ce qui rend l'appareil plus hygiénique et plus facile à nettoyer.

De préférence, un élément de positionnement du batteur est aussi configuré pour positionner le batteur, en engagement avec lesdits moyens d'entraînement, de manière excentrée par rapport à l'axe vertical médian de la cuve; de sorte que le batteur, lorsqu'entraîné en rotation, produit une circulation non-coaxiale du liquide par rapport audit axe vertical médian. Un élément de positionnement assure que le batteur est correctement en place localement au niveau du champ magnétique ainsi défini. Il évite au batteur de sortir du champ avant, pendant ou après l'opération de brassage. Il indique à l'utilisateur la position du batteur de manière simple et ne requiert pas de montage/démontage spécifique de celui-ci. De plus, lorsque le contenu de la cuve est versé, l'effet magnétique créé entre le batteur et le moyen d'entraînement permet de retenir le batteur en place dans la cuve.

Dans un mode, l'élément de positionnement est un relief formé dans la surface de la cuve et possède au moins une forme sensiblement complémentaire avec le batteur. Le batteur peut ainsi s'engager dans ledit relief ou creux. Un jeu suffisant peut être prévu pour permettre au batteur d'être entraîné en rotation sans frottements excessifs. Dans une alternative, des surfaces en matériau de faible coefficient de frottement peuvent être prévus.

Ainsi, le batteur est mis en place simplement par simple engagement de forme sans requérir d'outil spécifique. Le batteur peut être libre ou connecté par des moyens de connexion, de préférence, à démontage rapide.

Le relief ou creux et la paroi du fond de la cuve forme ensemble une paroi intégrale. Ainsi, il n'est pas nécessaire de recourir à des éléments d'étanchéité; ce qui réduit la complexité et rend l'appareil plus hygiénique. Le fond de cuve s'entend de toute la surface dans la partie basse de la cuve et constituant sensiblement toute la largeur de la cuve dans cette partie.

Le relief est, par exemple, prévu dans la paroi même de la cuve comme un renfoncement vers l'intérieur de la cuve; produisant en conséquence, un creux du côté extérieur de celle-ci. Le creux ainsi formé à l'extérieur de la cuve peut alors servir pour loger la portion d'entraînement magnétique du moyen d'entraînement; de sorte que le batteur est maintenu en élévation et à distance du fond de la cuve; ce qui améliore l'effet de brassage par rapport à une position du batteur qui serait adjacente au fond de la cuve.

Dans une variante possible, le moyen de positionnement peut être un creux de la surface interne de la cuve dans lequel se positionne partiellement le batteur.

Dans tous les cas, le moyen de positionnement sert ainsi de positionnement à la fois selon l'axe horizontal et vertical dans la cuve. Il sert aussi de guidage au batteur et évite à celui-ci de quitter accidentellement le champ magnétique au cours de l'opération de brassage.

Le batteur peut prendre différentes configurations. Dans l'une d'elles, le batteur possède une forme annulaire avec une lumière centrale s'adaptant dans le relief, servant de moyen de positionnement, se projetant à partir du fond de la cuve et possède au moins une portion asservie magnétiquement disposée à proximité de la périphérie de ladite lumière centrale. Une telle configuration est efficace car elle permet un emboîtement aisé du batteur dans la cuve. De plus, elle permet de maintenir le batteur à une certaine distance du fond de la cuve; ce qui est propice au foisonnement.

Dans un mode, le moyen d'entraînement comprend une portion magnétique d'entraînement qui s'engage du côté externe de la cuve et à l'intérieur dudit relief. La portion magnétique d'entraînement coopère ainsi avec au moins ladite portion asservie magnétiquement du batteur. La portion magnétique d'entraînement est ainsi commandée en rotation par un axe associé à un moteur électrique. La coopération magnétique entre l'organe d'entraînement et le batteur se fait donc au plus près; ce qui réduit les risques de désolidarisation ou de défaut d'entraînement, y compris à grande vitesse.

Dans une configuration du batteur, celui-ci possède une partie périphérique possédant des éléments de brassage.

Les éléments de brassage peuvent ainsi être constitués d'un ou plusieurs des éléments suivants: des spires en fil de forme toroïdale, des hélices, des pales, des grilles ou aiguilles. Certains éléments peuvent être plus efficaces que d'autres selon la nature du liquide, par exemple.

Dans une mode préféré, la cuve est cylindrique ou sensiblement cylindrique. Cependant, dans une variante possible de l'invention, les moyens de perturbation, pour empêcher ou casser un mouvement co-axial du fluide dans la cuve, comprennent une cuve de configuration non-cylindrique par rapport à l'axe vertical médian. La cuve peut adopter de nombreuses formes différentes sans sortir du cadre de l'invention.

Dans un mode possible, les moyens de perturbation comprennent des parois et/ou autres obstacles s'étendant en relief dans la cuve de manière décalée par rapport à l'axe vertical médian. Ainsi, ces éléments forment des moyens qui cassent tout mouvement purement coaxial de circulation du fluide dans la cuve. Ces éléments peuvent être, par exemple, des ailettes ou autres obstacles s'étendant radialement et horizontalement et/ou verticalement vers l'intérieur de la cuve. De préférence, ces éléments sont formés de manière intégrale ou d'une pièce avec le reste de la cuve.

Dans un autre mode, les moyens de perturbation comprennent des moyens de contrôle programmés pour commuter le sens de rotation du batteur plusieurs fois pendant l'exécution du moussage du liquide. En effet, dans une configuration symétrique de rotation du batteur dans la cuve, si l'on maintient un seul sens de rotation, le contenu (liquide et mousse) se déplace dans la cuve de manière concentrique au batteur et les différentes couches de même vitesse se déplacent toujours sur le même rayon et ne se mélange donc plus pour créer de la mousse. Ceci a pour effet de stopper la formation de mousse. Pour pallier ce problème, on prévoit donc un brassage discontinu afin d'interrompre à intervalles, réguliers ou irréguliers, l'effet de centrifugation mentionné plus haut. Ces interruptions régulières du sens de rotation, qui ont de préférence une fréquence de l'ordre de 0,3 à 1 Hz, permettent ainsi au mélange liquide/mousse de redescendre et de revenir en contact avec le batteur pour être à nouveau brassé dès que le brassage reprend dans le sens inverse.

Selon un aspect de l'invention, la cuve présente dans la partie prévue pour contenir le liquide une surface qui est sans ligne de jonction ou de raccordement entre deux pièces et sans ligne de démarcation d'orifice. En effet, un liquide comme le lait a tendance à rapidement encrasser toute zone d'interstice par déposition de solides. Ce phénomène est accentué par le chauffage du liquide qui a tendance à former une couche plus ou moins cuite ou brûlée et donc difficile à nettoyer. En évitant ces zones favorables à l'accumulation de solides, on réduit les risques hygiéniques et on facilite le nettoyage. Ainsi, de préférence, la cuve comprend une surface de réception du liquide qui est d'une pièce intégrale. La cuve peut ainsi être formée de plusieurs éléments soudés entre eux mais formant en final une pièce intégrale.

Afin de favoriser la formation de mousse tout en réduisant le temps de brassage, des moyens de chauffage sont prévus pour chauffer le liquide dans la chambre pendant le brassage. Ces moyens de chauffage sont préférentiellement des moyens de chauffage direct de la cuve. Dans un mode, il s'agit d'éléments résistifs isolés électriquement en contact avec au moins la paroi de fond de la cuve. Les éléments peuvent être choisis parmi:
- au moins un circuit chauffant du genre "film épais" en contact avec une surface externe de la cuve, ou
- des éléments résistifs de chauffage du type résistance blindée en contact avec la surface de la cuve.

D'autres éléments chauffants peuvent être:
- des moyens de chauffage par induction ou par infra-rouge ou,
- une combinaison de ces moyens avec des éléments résistifs chauffants.

Dans un mode préféré, les moyens de chauffage comprennent un circuit chauffant du genre "film épais" isolé électriquement et imprimé directement sur la surface externe du fond de la cuve. Une telle configuration permet d'augmenter la densité de puissance contre la surface de cuve et donc de réduire le temps de production de mousse car le liquide parvient plus rapidement à température optimale pour le moussage; ceci tout en évitant le collage du fait d'une meilleure répartition de la puissance.

L'appareil selon l'invention peut avantageusement comprendre un ensemble de connexion électrique sans fil, permettant de relier d'une part le bâti et la cuve à, d'autre part, un support de base d'alimentation électrique raccordable au secteur. Ainsi, le bâti et la cuve faisant partie d'une unité de foisonnement peuvent être déplacée pour remplissage, service et nettoyage. Pour cela, l'ensemble de connexion sans fil comprend un premier connecteur solidaire du fond du bâti et un second connecteur solidaire du support de base d'alimentation; les deux connecteurs se raccordant électriquement pour alimenter les moyens électrique du bâti, lors de la repose du bâti sur le support de base.

Ainsi, selon un autre aspect, l'invention se rapporte à un appareil pour la préparation d'une mousse à partir d'un liquide à base de lait comprenant:
- une cuve pour recevoir le liquide à mousser dans lequel se positionne un batteur actionnable en rotation,
- un bâti en association avec la cuve;
- un système d'entraînement du batteur,
caractérisé en ce que
le batteur est configuré pour être entraîné et retenu magnétiquement dans la cuve par le système d'entraînement du batteur;
et en ce qu'il comprend une unité de foisonnement sans fil qui est amovible par rapport à une unité d'alimentation électrique.

Ainsi, un avantage d'un tel appareil est lié à la mobilité de l'unité de foisonnement qui facilite le service de la mousse, lorsque par exemple, la mousse est versée dans une tasse pour préparer un cappuccino. Dans ce cas, le batteur est aussi retenu sans tomber par effet magnétique dans la cuve et n'a pas besoin d'être enlevé de la cuve pendant le service. Les éléments magnétiques sont ainsi configurés (Dimensionnement, position, tailles, etc.) pour que le batteur soit retenu dans la cuve sans risque de chute lorsque la cuve est inclinée, son ouverture vers le bas, lors du versement de la mousse.

L'invention se rapporte aussi à une méthode pour préparer une mousse à partir d'un liquide alimentaire à base de lait dans un appareil comprenant:
- une cuve pour recevoir le liquide à mousser dans lequel se positionne un batteur actionnable en rotation,
- des moyens d'entraînement du batteur,
- des moyens d'alimentation électrique pour alimenter les moyens d'entraînement en rotation,
caractérisé en ce qu'elle consiste, entre autre, à entraîner le batteur par effet d'entraînement magnétique, de manière asymétrique par rapport à l'axe vertical médian de la cuve, et sans intrusion d'un organe de liaison du batteur traversant la cuve.

De préférence, la méthode comprend un chauffage du liquide dans la cuve pendant le brassage. Le chauffage se fait préférentiellement par l'application directe et répartie d'éléments chauffants contre la surface externe de la cuve. La répartition des éléments chauffants produit, de préférence, une densité moyenne de puissance électrique de la surface chauffante comprise entre 15 et 25 Watt par cm² de la surface chauffante. La surface recouverte par les éléments chauffants par rapport à la surface chauffante totale est aussi préférentiellement d'au moins 40%, de préférence, comprise entre 40 et 60% de celle-ci. Une application directe associée à une répartition de puissance des éléments chauffants, telle que suggérée, permet d'obtenir plus rapidement une mousse chaude dans la cuve en réduisant le risque de collage des résidus solides contre le fond de la cuve. On obtient ainsi une mousse stable, chaude, tout en minimisant les résidus solides contre les parois de la cuve; donc facilitant ainsi le nettoyage de l'appareil. Une telle méthode trouve une application particulièrement adaptée dans la préparation de boissons telles que cappuccinos en association ou intégration avec une machine à café.

### Description brève des figures

FIG. 1 montre une vue en perspective d'appareil selon l'invention;
FIG. 2 montre une vue en coupe selon A-A de l'appareil de la figure 1;
FIG. 3 montre une vue en perspective et en coupe selon A-A de l'appareil de la figure 1;
FIG. 4 montre une vue en perspective et en coupe selon A-A d'une partie de l'appareil, en particulier, de la cuve et du bâti pris isolément;
FIG. 5 montre le batteur de l'appareil;
FIG. 6 montre le batteur en coupe;
FIG. 7 montre le moyen de chauffage direct associé au fond de la cuve de l'appareil;
FIG. 8 montre une vue de dessus d'une variante de forme de cuve avec son batteur;
FIG. 9 montre une vue de dessus d'une variante de cuve avec des reliefs de perturbation de la circulation du fluide;
FIG. 10 montre une vue en coupe transversale selon B.B d'une variante de la cuve de la FIG. 9.

### Description détaillée des figures:

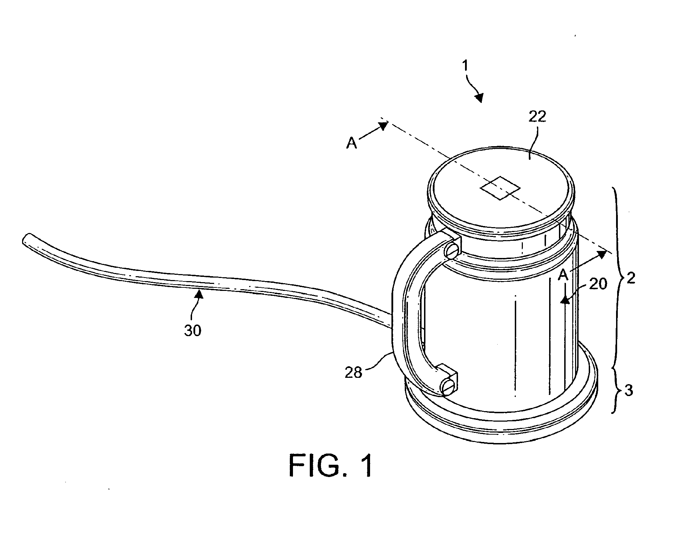

En référence à la Fig. 1, un appareil de préparation d'une mousse de lait est représenté. Une tel appareil sert à produire de la mousse à partir d'un liquide alimentaire ayant la propriété de s'émulsifier sous l'effet combiné d'un brassage mécanique et de la chaleur, en particulier, du lait ou une base de lait tel que du lait frais, du lait pasteurisé ou UHT, écrémé, demi-écrémé ou entier, un lait reconstitué à partir de poudre et d'eau ou encore à partir d'un concentré de lait et d'eau ou encore un mélange de lait et d'un autre constituant tel que du café.

L'appareil 1 selon l'invention comprend une unité de foisonnement sans fil 2 et une unité de base électrique 3 sur laquelle l'unité de foisonnement 2 se raccorde électriquement par simple posage. L'unité de base électrique 3 est alimentée en courant électrique du secteur par un cordon 30. L'unité de foisonnement sans fil 2 comprend sur le côté une poignée 28 permettant de la manipuler facilement; comme pour la soulever, la vider de son contenu après moussage ou encore la nettoyer après l'avoir vidée de son contenu. L'unité comprend un bâti 20 sur lequel est montée la poignée 28; lequel bâti est refermé par un couvercle amovible 22. Ce dernier assure une protection à la fois de l'extérieur vers l'intérieur, par exemple, contre la poussière, que de l'intérieur vers l'extérieur, en particulier, en empêchant toute projection de liquide ou mousse lors de l'activation de l'unité dans l'opération de brassage.

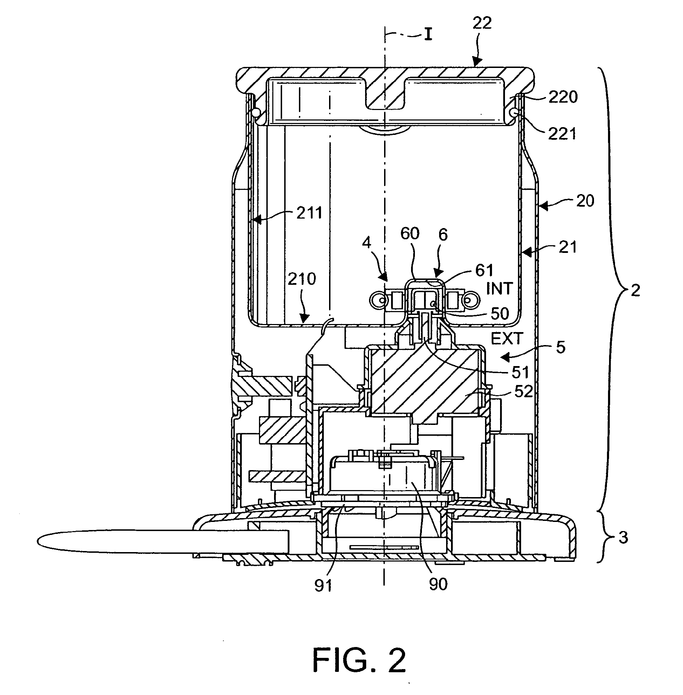

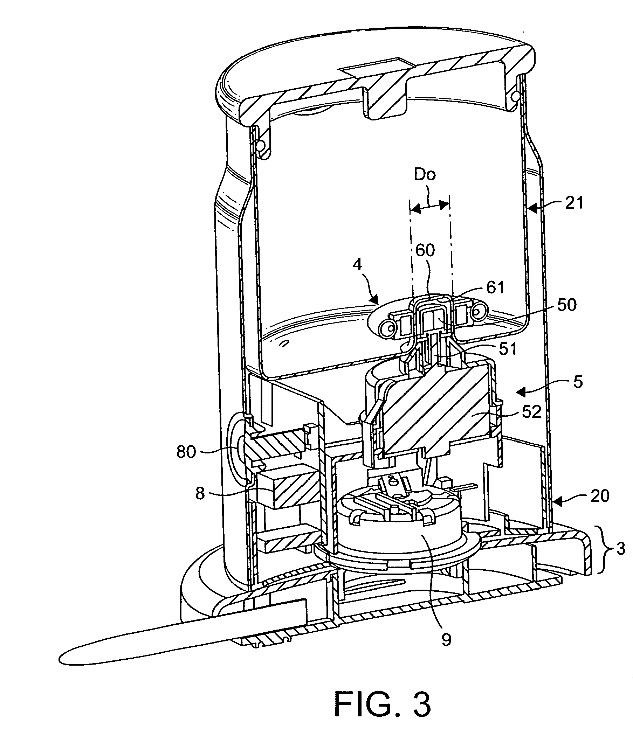

L'appareil va maintenant être décrit plus en détail en référence aux figures 2 et 3. L'unité de foisonnement 2 comprend le bâti 20 dans lequel est montée une cuve 21. La cuve 21 reçoit le liquide à chauffer et à foisonner. Elle doit être étanche et de contenance appropriée pour le volume de mousse à produire. En général, un tel appareil est conçu pour produire une mousse de lait d'un volume de l'ordre de 50 à 100 cm³ apte à servir de la mousse de lait pour 1 à 3 boissons du type cappuccino. Toutefois, une cuve de plus grande contenance peut être envisagée en fonction des besoins. Bien entendu, l'appareil de l'invention peut aussi servir à produire un liquide chaud lorsque l'opération de brassage est supprimée ou les moyens permettant de faire cette opération sont désactivés.

A l'intérieur (INT) de la cuve est positionné un batteur 4. Des moyens d'entraînement 5 du batteur 4 sont, quant à eux positionnés à l'extérieur (EXT) de la cuve; de préférence, dans l'espace entre la cuve et l'intérieur du bâti 20. Le batteur 4 et les moyens d'entraînement 5 sont positionnés relativement l'un à l'autre pour créer un brassage forcé du liquide à l'intérieur de la cuve sans utilisation d'un moyen intrusif traversant la cuve. Pour cela, le batteur et son moyen d'entraînement sont du type magnétique; de sorte que le moyen d'entraînement 5 produit un champ magnétique tournant qui entraîne le batteur, lui-même muni d'un moyen asservi au champ magnétique. Les moyens magnétiques sont placés de manière décalée par rapport à l'axe central "I" de la cuve de telle sorte que la batteur soit asservi en rotation en produisant ainsi une circulation du liquide ou mousse qui ne soit pas coaxiale par rapport à l'axe central médian de la cuve. En fait, par une telle configuration, le liquide, puis la mousse, ont tendance à circuler en produisant sensiblement un cône asymétrique ayant pour centre sensiblement le centre du batteur. Ceci permet d'éviter de former des couches de vitesse constante qui restent en circulation sur un même rayon et donc ne se brassent pas entre elles. Les couches au contraire se brassent entre elles du fait que sur un même rayon, les couches circulent à des vitesses différentes; en particulier; pour un rayon donné, les couches circulent à des vitesses plus rapides du côté où le batteur est le plus éloigné du bord de la cuve et à des vitesses plus lentes du côté où le batteur est le plus proche du bord. Ceci favorise la circulation de l'ensemble du liquide ou mousse à l'intérieur de la cuve, évite l'immobilisation de couches de liquide ou mousse et réduit ainsi les zones non ou faiblement agitées.

Afin de garantir la rotation contrôlée du batteur dans la cuve sans risque de déplacement de celui-ci et donc, d'éviter la perte de contrôle du champ magnétique, un moyen de positionnement 6 du batteur est prévu dans le fond 210 de la cuve. Le moyen de positionnement est ainsi placé de manière excentrée dans la cuve mais en relation avec la position du champ magnétique pour permettre au batteur d'être entraîné en rotation. Dans le cas illustré, le moyen de positionnement 6 est un relief formé dans la paroi de la cuve et autour duquel est guidé le batteur 4 en rotation sans frottement excessif. Le moyen de positionnement pourrait avoir d'autres configurations comme être en creux, par exemple, dans lequel une partie du batteur est alors insérée.

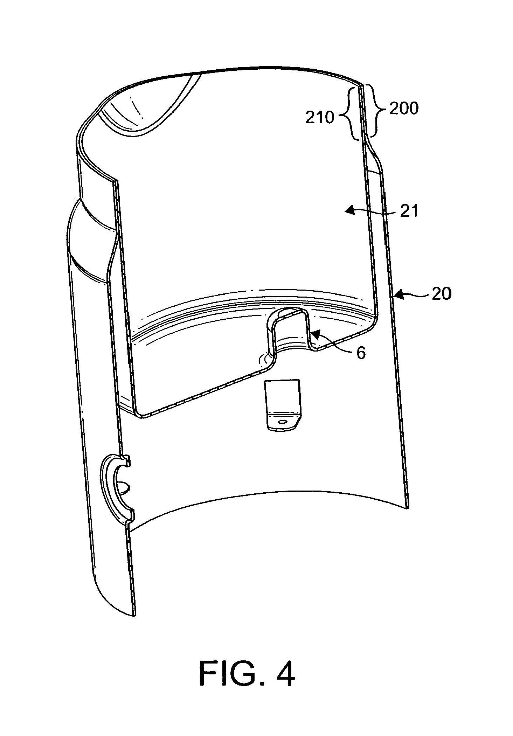

Un avantage d'un moyen d'entraînement non-intrusif est de pouvoir construire une cuve dont la partie de réception du liquide, et son fond au moins, ne comprend aucune ligne de jonction ou de raccordement discontinue ou encore de lignes de démarcation pour des orifices ou autres, pouvant créer des zones à problème d'hygiène potentiel et/ou des zones difficilement nettoyables ou rinçables. Ainsi, la surface de réception du liquide de la cuve est préférablement formée d'une pièce intégrale Ne sont pas considérées comme des lignes de jonction ou de raccordement discontinues, au sens de l'invention, des soudures formant un cordon continu entre deux éléments, par exemple. En revanche, une jonction par vis, rivets ou un emboîtement est considéré comme une jonction ou raccordement discontinu susceptible de poser des problèmes d'hygiène. La cuve 21 dont ses surface relevées 211 et son fond 210, forme alors une surface de contact avec le liquide sensiblement lisse, sans zone d'accroche préférentielle pour les matières solides alimentaires telles que protéines ou autres. Une telle cuve peut être fabriquée dans un métal bon conducteur thermique tel qu'en inox, cuivre ou en aluminium. Elle peut être, par exemple, moulée d'une seule pièce. Dans la construction illustrée à la Fig. 4, la cuve 21 est raccordée aux bords 200 du bâti 20 par ses bords supérieurs 210 par tout moyen de connexion approprié comme par soudage, brasage, collage ou clipsage. La cuve seule peut aussi être montée de manière amovible par rapport au bâti de façon à pouvoir être facilement démontée pour nettoyage dans un lave-vaisselle. Le couvercle 22 se raccorde à la cuve en engagement serré par l'intermédiaire d'un bord d'engagement 220 et un joint élastomère ou plastique déformable 221. D'autres moyens de fermeture du couvercle 22 sont possibles comme le vissage ou clipsage élastique.

Pour assurer l'entraînement du batteur, les moyens d'entraînement 5 sont arrangés pour produire un champ magnétique traversant le moyen de positionnement 6 qui forme le relief 60 de l'intérieur de la cuve (INT). Pour cela, le moyen d'entraînement 5 comprend une portion d'entraînement magnétique 50 qui se loge dans la partie formant un creux ou renfoncement 61 vu de l'extérieur de la cuve (EXT). Cette portion d'entraînement magnétique comprend ainsi un ou plusieurs éléments 500 en matériau ferro-magnétique. La portion d'entraînement magnétique 50 est elle-même entraînée en rotation directe par un axe d'entraînement 51 reliée à un moteur électrique 52 dans l'alignement vertical du moyen de positionnement 6. Pour obtenir des résultats avantageux sur la production de mousse, la vitesse de rotation du batteur est contrôlée pour atteindre au moins 1500 tour/min. De préférence, la vitesse est d'au moins 1650 tour/min, plus préférentiellement, entre 1800 et 2500 tr/min.

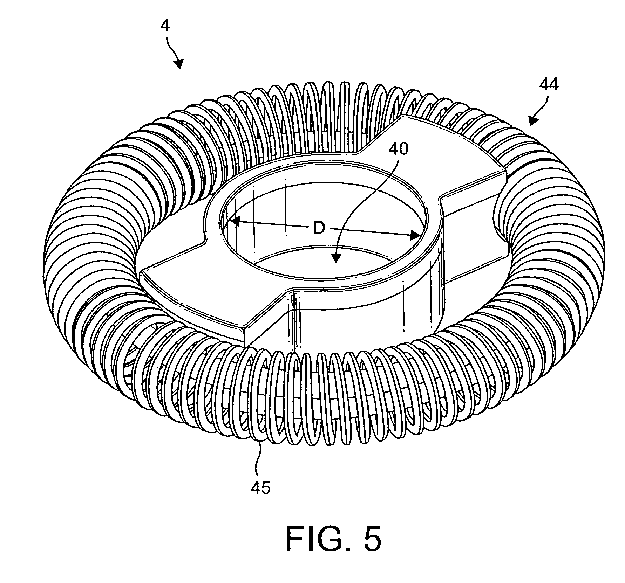

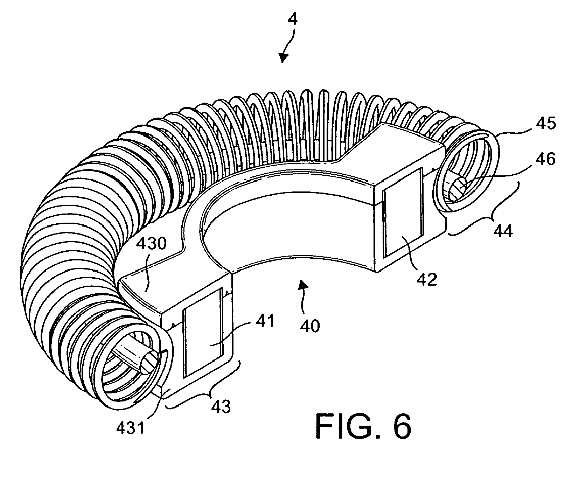

Comme le montre les FIG. 5 et 6, le batteur 4 selon un mode de réalisation de l'invention a une forme générale annulaire permettant son engagement libre autour du moyen de positionnement formant relief. Le relief a, de préférence, une forme de cylindre. Le batteur 4 est ainsi muni d'une lumière centrale 40 de forme complémentaire et de diamètre interne D légèrement plus grand que le diamètre externe D₀ de la surface externe du relief 60. Les diamètres sont ainsi déterminés relativement l'un par rapport à l'autre, afin de permettre une rotation sans frottement excessif ou avec tout du moins un minimum de frottements, tout en assurant une liaison magnétique efficace avec le moyen d'entraînement. Le batteur comprend au moins une portion asservie magnétiquement qui possède des éléments en matériau ferromagnétique tels qu'une paire d'aimants 41, 42 logés dans un support 43 en plastique; lequel peut être injecté autour des aimants ou assemblé en plusieurs pièces 430, 431 par clipsage, collage ou tout autre moyen. Le batteur possède une portion externe ou périphérique 44 qui comprend les éléments de brassage proprement-dit. Dans le mode représenté, ces éléments sont formés par une série de spires 45 de fil ayant une forme générale de tore. Pour éviter leur déformation, les spires 45 sont maintenues par un élément annulaire de renfort interne 46. Lorsqu'il est entraîné en rotation, un tel élément produit une émulsification rapide du liquide, en particulier du lait, notamment lorsque les conditions de températures de moussage sont obtenues de manière concomitante.

Toutefois, d'autres configurations équivalentes des éléments de brassage peuvent remplacer celle représentée. Il peut, par exemple, s'agir d'hélices, de pales, de grilles ou d'aiguilles ou d'autres encore.

Ainsi, lorsque le moteur est alimenté électriquement, son axe entraîne en rotation la portion d'entraînement magnétique 50; ce qui crée un champ magnétique local tournant coopérant avec les aimants 41, 42; ce qui déplace de ce fait le batteur en rotation autour du relief. La vitesse de rotation du batteur est ainsi réglée sur la vitesse de rotation de l'axe du moteur.

Selon un aspect de l'invention, des moyens de chauffage sont prévus pour chauffer la cuve lors du brassage. Le chauffage permet de faciliter la production de mousse et de réduire considérablement le temps de brassage. La mousse est aussi préférablement servie chaude notamment lorsqu'elle est destinée à des boissons chaudes comme pour un cappuccino. Pour cela, dans un mode de l'invention, des moyens de chauffage direct de la cuve sont prévus. Par moyens de chauffage direct, il faut entendre des moyens du type à résistance chauffante ou équivalents, isolés électriquement, mais directement associés thermiquement à la surface de la cuve.

Dans un mode de l'invention, les moyens de chauffage direct comprennent un circuit chauffant du genre "film épais" ("thick film") imprimé directement sur la surface externe de la cuve; de préférence, sur la surface externe de fond de la cuve. L'avantage de cette technologie est qu'elle apporte une bonne répartition de la puissance transmise à la cuve (c'est à dire; donc une plus grande densité en Watt par centimètre carré). En conséquence, on évite que le liquide ne colle contre la surface de la cuve tout en assurant une excellente transmission de la chaleur au liquide.

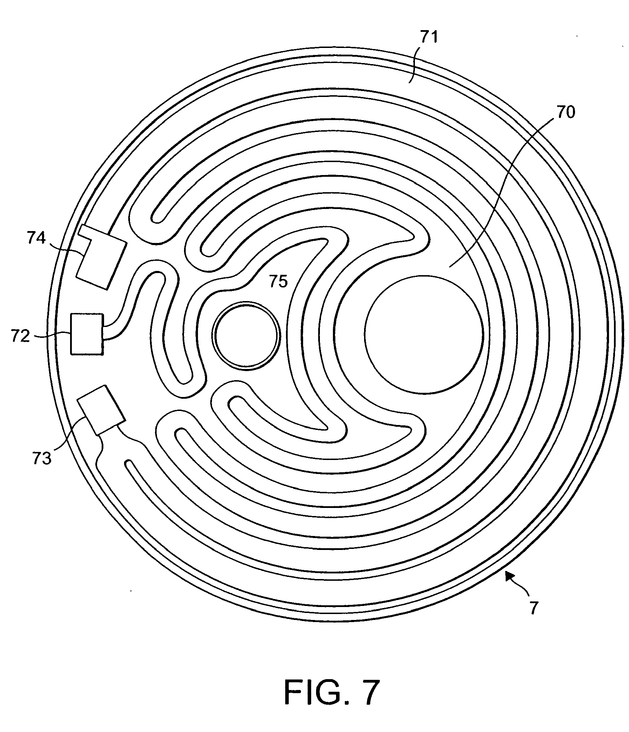

La FIG. 7 illustre un exemple de modèle de circuit chauffant imprimé de ce type. Dans un mode possible, un circuit s'étend sur le fond seulement de la cuve (par exemple, comme dans le mode de la FIG. 7). Dans un autre mode possible, un circuit s'étend sur le fond et les parois latérales de la cuve. Dans un autre mode possible, plusieurs circuits sont prévus; dont l'un au moins sur le fond, et l'un au moins sur les côtés de la cuve.

Le circuit 7 tel que représenté comprend donc une couche d'isolation 70 associée à la surface externe de la surface chauffée de la cuve et une piste imprimée chauffante résistive 71; qui en utilisation est tournée vers le bas. La piste 71 est arrangée de façon à produire une puissance totale d'environ 250 à 1200 Watt, de préférence 400 Watt appliquée à la surface de chauffe. Sa densité moyenne de puissance électrique rapportée à la surface de chauffe ou circuit 7 est ainsi comprise entre 5 et 30 Watt par cm², de préférence, entre 15 et 25 Watt par cm². La piste 71 recouvre préférentiellement au moins 40% de la surface de chauffe, et plus préférentiellement plus de 50% de celle-ci: de manière à produire une répartition adéquate de la puissance totale sur la surface de chauffe; ce qui le lait de coller et brunir sur la surface interne de la cuve. La densité moyenne est calculée par la formule: Densité moyenne = Puissance électrique totale/Surface totale (7).

Des contacts électriques 72, 73, 74 sont localisés aux extrémités des pistes pour assurer la liaison électrique du circuit. Selon un aspect de l'invention, les contacts électriques sont au nombre de trois, associés à trois extrémités; ainsi, un contact 72 associé au neutre, un contact 73 associé à la phase et enfin un troisième contact 74 relié au moteur électrique de basse tension pour alimenter celui-ci à la tension requise (par exemple: 8,2 Volts dans l'exemple présenté). Une telle configuration permet de se passer d'un transformateur pour faire marcher le moteur; et donc permet de réduire le coût et la complexité du système. Dans un mode possible, le circuit chauffant imprimé comprend une plaque de support métallique intermédiaire séparant la couche d'isolant du fond de la cuve. Dans ce cas, la plaque de support est la plus fine possible; de préférence, inférieure ou égale à 1 mm. Une plaque de support séparée du fond peut être nécessaire dans un mode dans lequel la cuve est montée de façon amovible par rapport au bâti. Toutefois, dans un mode où la cuve est montée de façon permanente, le circuit est préférablement imprimé directement sur la cuve.

D'autres technologies peuvent remplacer un circuit de chauffage du type "film épais" comme par exemple des résistances blindées. Toutefois, cette technologie est moins préférée car la transmission de la puissance ne se fait pas sur une surface aussi large (mais généralement sur une simple génératrice) et elle requiert une opération supplémentaire de brasage de la résistance directement contre la surface de la cuve. En conséquence, pour transmettre une puissance identique, il faut surchauffer la résistance; ce qui créé des zones où localement le lait a tendance à coller contre la surface de la cuve. D'autres moyens de chauffage comprennent:
le chauffage par induction ou par infra-rouge. Ces moyens peuvent être combinés ou employés à la place des moyens de résistance.

Dans un mode de l'invention, un capteur de température est prévu pour mesurer la température de la cuve. Le capteur peut être rattaché au contact isolé 75 du circuit de "film épais" 7; de préférence, vers le centre du fond de la cuve. Le capteur peut être du type NTC relié à un contrôleur électronique 8. Le capteur peut aussi être un simple capteur du type bi-lame moins précis et moins reproductible mais ne nécessitant pas une électronique de contrôle associée. Les contacteurs du moyen de chauffage sont eux-même reliés électriquement au contrôleur 8 par lames, fils et/ou autres moyens. Lorsque la température atteint une température de consigne donnée, le contrôleur coupe le circuit d'alimentation des moyens de chauffage. La température de consigne est déterminée pour pouvoir chauffer le liquide en dessous de sa température d'ébullition, de préférence, dans une plage de température optimale pour le moussage du liquide. Pour le lait, par exemple, la température du liquide est amenée à une température comprise entre 60 et 80°C en moins de 40 secondes; de préférence, entre 65 et 75°C en environ 30 secondes. Bien entendu, la cinétique de montée en température est en partie dépendantes de facteurs comme le volume à chauffer et la température initiale du liquide.

Le bâti comprend un bouton d'activation 80 opérable par l'utilisateur. Lorsque celui-ci est pressé ou activé par tout autre moyen, il commande de manière concomitante l'alimentation électrique des moyens de chauffage et du moteur électrique pour la rotation du batteur. Ainsi, le liquide est à la fois chauffé directement et brassé en même temps. Un volume de lait d'environ 50 mL peut ainsi être transformé en une mousse stable à 75°C en moins de 30 secondes.

L'unité de foisonnement sans fil 2 et l'unité de base électrique 3 se raccordent par un assemblage 9 de connecteurs généraux connus sous la dénomination de connecteurs "sans fil". Un premier connecteur est relié à la partie inférieure centrale du bâti 20. Le premier connecteur est relié électriquement aux éléments électriques et de contrôle de l'unité de foisonnement, en particulier, le contrôleur, le moteur électrique et les moyens de chauffage. Un second connecteur de forme complémentaire est associé à l'unité de base électrique; laquelle est raccordable au secteur par le cordon électrique.

Le premier connecteur 90 comprend des terminaux électriques, typiquement, un neutre, une phase et une terre, concentriquement arrangés et qui coopèrent avec des récepteurs électriques du second connecteur 91. Le premier et second connecteurs sont configurés par leurs formes pour coopérer en engagement l'un dans l'autre par simple posage vertical (ou sensiblement vertical) de l'unité de foisonnement sur l'unité de base électrique de sorte que les terminaux électriques (phase, neutre, terre) du premier connecteur 90 s'associent au contact des récepteurs électriques respectifs (phase, neutre, terre) du second connecteur 91. Un exemple d'assemblage de connecteurs de ce type, connu en soi, est décrit en détail dans le brevet US 5,971,810. L'avantage d'un tel système est qu'il permet, dans l'application à l'invention, de pouvoir désolidariser facilement l'unité de foisonnement pour servir la mousse et pour le nettoyage de la cuve. Il permet de concevoir aussi une cuve qui soit munie de moyens de chauffage directement en relation avec les moyens de chauffage; pour une meilleure efficacité de chauffage et donc un temps de préparation de la mousse réduit. D'autres modèles possibles de connecteurs sans fil connus peuvent être utilisés comme moyens équivalents sans sortir du cadre de l'invention.

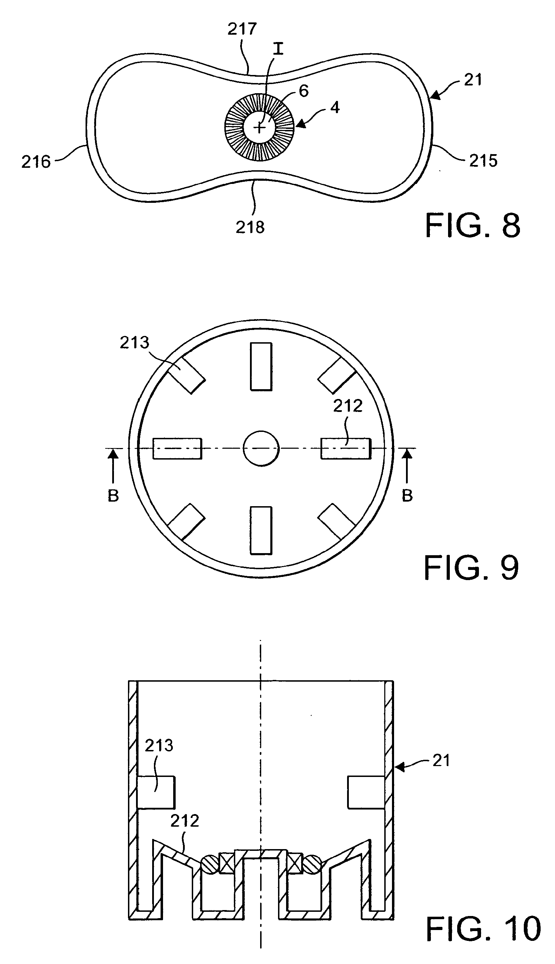

La FIG. 8 représente un mode dans lequel la cuve non-cylindrique par rapport à l'axe vertical I. Dans cet exemple, la cuve 21 a une forme allongée avec deux premiers côtés convexes 215, 216 et deux seconds côtés 217, 218, à 90° des premiers côtés, qui sont concaves. Le batteur 4 et les moyens de positionnement 6 peuvent alors être positionnés au centre de la cuve comme illustrés ou encore désaxés par rapport au centre. La forme de la cuve est telle qu'elle produit une circulation perturbée du liquide et de la mousse; ce qui favorise la création rapide de mousse et réduit le volume de liquide possible restant.

Les FIGs. 9 et 10 illustrent un autre mode de l'invention, dans lequel la cuve 21 possède des parois et/ou obstacles qui s'étendent en relief de manière décalée par rapport à l'axe vertical médian I. En particulier, dans l'exemple illustrés, une pluralité de protubérances 212 de perturbation de la circulation du fluide sont présents au fond et de même 213 sur les côtés de la cuve. Ces parois s'étendent sensiblement radialement et sur des portions seulement de la cuve. Elles sont de préférence décalées pour favoriser une circulation tortueuse du fluide dans la cuve. Il va de soi que de nombreuses dispositions différentes et équivalentes sont à la portée de l'homme de l'art sans pour autant sortir du cadre de l'invention.

## Revendications

1. Appareil pour la préparation de mousse à partir d'un liquide à base de lait comprenant:
une cuve pour recevoir le liquide à mousser dans lequel se positionne un batteur actionnable en rotation,
un bâti en association avec la cuve;
des moyens d'entraînement du batteur,
l'appareil comprenant en outre des moyens d'alimentation électrique pour alimenter électriquement les moyens d'entraînement,
**caractérisé en ce que**
les moyens d'entraînement et le batteur sont configurés de façon à ce que le batteur soit entraîné, par effet d'entraînement magnétique, par les moyens d'entraînement, sans l'intrusion au travers de la paroi de la cuve, d'un organe de liaison mécanique,
et **en ce que** des moyens de perturbation sont prévus pour casser ou empêcher une circulation symétrique du liquide autour de l'axe vertical médian de la cuve.

2. Appareil selon la revendication 1, **caractérisé en ce que** les moyens de perturbation comprennent
un moyen d'entraînement produisant au moins un champ magnétique excentré par rapport à l'axe vertical médian de la cuve.

3. Appareil selon la revendication 2, **caractérisé en ce qu'**un élément de positionnement du batteur est configuré pour positionner le batteur, en engagement avec lesdits moyens d'entraînement, de manière excentrée par rapport à l'axe vertical médian de la cuve; de sorte que le batteur, lorsqu'entraîné en rotation, produit une circulation non-coaxiale du liquide par rapport audit axe vertical médian.

4. Appareil selon la revendication 3, **caractérisé en ce que** l'élément de positionnement est un relief ou un creux formé dans la surface interne de la cuve et possède au moins une forme sensiblement complémentaire avec le batteur pour recevoir celui-ci en engagement en rotation.

5. Appareil selon la revendication 3, **caractérisé en ce que** le relief ou creux et la paroi de fond de la cuve forme ensemble une paroi intégrale.

6. Appareil selon les revendications 4 ou 5, **caractérisé en ce que**
le batteur possède une forme annulaire avec une lumière centrale configurée pour s'engager dans le relief; ledit relief se projetant à partir du fond de la cuve vers l'intérieur (INT) de celle-ci; ledit batteur possèdant au moins une portion asservie magnétiquement disposée à proximité de la périphérie de ladite lumière centrale.

7. Appareil selon les revendications 4, 5 ou 6, **caractérisé en ce que** le moyen d'entraînement comprend une portion magnétique d'entraînement qui s'engage du côté externe (EXT) de la cuve et à l'intérieur du relief; afin de coopérer avec au moins ladite portion asservie magnétiquement du batteur; laquelle portion magnétique d'entraînement est commandée en rotation par un axe associé à un moteur électrique.

8. Appareil selon la revendications 7, **caractérisé en ce que** le batteur possède une partie périphérique possédant des éléments de brassage.

9. Appareil selon les revendications 6 ou 7, **caractérisé en ce que** les éléments de brassage sont constitués d'un ou plusieurs des éléments suivants: des spires en fil de forme toroïdale, des hélices, des pales, des grilles ou aiguilles.

10. Appareil selon l'une quelconque des revendications précédentes **caractérisé en ce que**
les moyens de perturbation comprennent une cuve de configuration non-cylindrique par rapport à l'axe vertical médian.

11. Appareil selon l'une quelconque des revendications précédentes **caractérisé en ce que**
les moyens de perturbation comprennent des parois et/ou autres obstacles s'étendant en relief dans la cuve de manière décalée par rapport à l'axe vertical médian.

12. Appareil selon l'une quelconque des revendications précédentes **caractérisé en ce que**
les moyens de perturbation comprennent des moyens de contrôle programmés pour commuter le sens de rotation du batteur plusieurs fois pendant l'exécution du moussage du liquide.

13. Appareil selon l'une des revendications précédentes
**caractérisé en ce que**
la cuve présente une surface de réception du liquide, dont au moins un fond et des bords relevés, formée d'une seule pièce.

14. Appareil selon la revendication 13, **caractérisé en ce que** ladite surface de réception est sans ligne de jonction ou de raccordement discontinue et sans ligne de démarcation d'un quelconque orifice.

15. Appareil selon l'une quelconque des revendications précédentes, **caractérisé en ce qu'**il comprend des moyens de chauffage en association avec la cuve pour chauffer le liquide dans la cuve et des moyens de contrôle pour activer les moyens de chauffage lors du brassage.

16. Appareil selon la revendication 15, **caractérisé en ce que** les moyens de chauffage comprennent des éléments résistifs chauffants isolés électriquement en contact avec au moins la paroi de fond de la cuve.

17. Appareil selon la revendication 16,**caractérisé en ce que** les moyens de chauffage sont choisis parmi:
- au moins un circuit chauffant du genre "film épais" en contact avec la surface externe de la cuve, ou
- des éléments résistifs de chauffage du type résistance blindée en contact avec la paroi,
- un moyen de chauffage par induction ou infra-rouge
- ou une combinaison de ces moyens.

18. Appareil selon l'une quelconque des revendications précédentes **caractérisé en ce qu'**il comprend un ensemble de connexion électrique sans fil, permettant de relier d'une part le bâti et la cuve à, d'autre part, un support de base d'alimentation électrique raccordable au secteur.

19. Appareil selon la revendication 18, **caractérisé en ce que** l'ensemble de connexion sans fil comprend un premier connecteur solidaire du fond du bâti et un second connecteur solidaire du support de base d'alimentation; les deux connecteurs se raccordant électriquement pour alimenter les moyens électrique du bâti, lors de la repose du bâti sur le support de base.

20. Appareil pour la préparation d'une mousse à partir d'un liquide à base de lait comprenant:
une cuve pour recevoir le liquide à mousser dans lequel se positionne un batteur actionnable en rotation,
un bâti en association avec la cuve;
un système d'entraînement du batteur,
**caractérisé en ce que**
le système d'entraînement du batteur et le batteur, lui-même, comprennent des éléments magnétiques permettant l'entraînement magnétique du batteur en rotation dans la cuve;
et **en ce que** le système d'entraînement du batteur et le batteur sont positionnés de manière décalée par rapport à l'axe vertical médian de la cuve afin d'empêcher une circulation symétrique du liquide dans la cuve autour de l'axe vertical médian de la cuve.

21. Appareil pour la préparation d'une mousse à partir d'un liquide à base de lait comprenant:
- une cuve (21) pour recevoir le liquide à mousser dans lequel se positionne un batteur (4) actionnable en rotation,
- un bâti (20) en association avec la cuve (21);
- un système d'entraînement (5) du batteur,
**caractérisé en ce que**
le batteur (4) est configuré pour être entraîné et retenu magnétiquement dans la cuve (21) par le système d'entraînement (5) du batteur;
et **en ce qu'**il comprend une unité de foisonnement (2) sans fil qui est amovible par rapport à une unité d'alimentation électrique (3).

22. Méthode pour préparer une mousse à partir d'un liquide alimentaire à base de lait dans un appareil comprenant:
- une cuve pour recevoir le liquide à mousser dans lequel se positionne un batteur actionnable en rotation,
- des moyens d'entraînement du batteur,
- des moyens d'alimentation électrique pour alimenter les moyens d'entraînement en rotation,
**caractérisé en ce qu'**il consiste, entre autre, à entraîner le batteur par effet d'entraînement magnétique, de manière asymétrique par rapport à l'axe vertical médian de la cuve, et sans intrusion d'un organe de liaison du batteur traversant la cuve.

23. Méthode selon la revendication 22, **caractérisée en ce qu'**il comprend un chauffage du liquide dans la cuve pendant le brassage.

24. Méthode selon la revendication 23, **caractérisée en ce que** le chauffage se fait par application directe et répartie des éléments chauffants contre la surface externe de la cuve.

25. Méthode selon la revendication 24, **caractérisée en ce que** la répartition des éléments chauffants produit une densité de puissance électrique de la surface chauffante comprise entre 15 à 25 Watt par cm²; avec une surface de recouvrement par les éléments chauffants par rapport à la surface chauffante d'au moins 40%.
